# EUROPÄISCHE PATENTSCHRIFT

(11) **EP 1 015 790 B1**
(45) Veröffentlichungstag und Bekanntmachung des Hinweises auf die Patenterteilung: **28.08.2002**
(21) Anmeldenummer: 98954193.3
(22) Anmeldetag: 18.09.1998
(51) Int. Cl.: F16F 9/05

(54) **LUFTFEDERSYSTEM**
PNEUMATIC SUSPENSION SYSTEM
SYSTEME DE SUSPENSION PNEUMATIQUE

(30) Priorität: 25.09.1997 DE 19742245
(43) Veröffentlichungstag der Anmeldung: 05.07.2000
(73) Patentinhaber: PHOENIX AKTIENGESELLSCHAFT, 21079 Hamburg (DE)
(72) Erfinder: SONNAK, Ulrich, D-21075 Hamburg (DE)
(86) Internationale Anmeldenummer: DE9802773
(87) Internationale Veröffentlichungsnummer: WO99015808

(56) Entgegenhaltungen:
- EP-A- 0 295 392
- DE-A- 1 908 373
- DE-A- 2 064 751
- FR-A- 2 093 448
- US-A- 4 722 516
- PATENT ABSTRACTS OF JAPAN vol. 013, no. 469 (M-883), 24. Oktober 1989 & JP 01 182642 A (BRIDGESTONE CORP), 20. Juli 1989
- PATENT ABSTRACTS OF JAPAN vol. 004, no. 116 (M-027), 19. August 1980 & JP 55 076237 A (TOYO TIRE & RUBBER CO LTD), 9. Juni 1980

## Beschreibung

Die Erfindung betrifft ein Luftfedersystem, bestehend mindestens aus
- einem Luftfederbalg aus elastomerem Werkstoff, der gegebenenfalls mit Verstärkungseinlagen versehen ist;
- einem Luftfederdeckel, umfassend einen unteren Bereich, an dem das obere Ende des Luftfederbalges mittels eines ersten Klemmringes oder dergleichen befestigt ist, einen mittleren Bereich und einen oberen Bereich, der zugleich mit einem Anschlußbauteil, insbesondere mit einem karosseriefesten Bauteil, in Verbindung steht; sowie
- einem Luftfederkolben, an dem das untere Ende des Luftfederbalges ebenfalls mittels eines zweiten Klemmringes oder dergleichen befestigt ist und an dessen Außenwand der Luftfederbalg abrollen kann.

Ein derartiges Luftfedersystem ist beispielsweise in der Druckschrift DE-A-36 43 073 beschrieben.

Ausgehend von dem oben umrissenen Stand der Technik eines Luftfedersystems besteht die Aufgabe darin, die bei der Federbewegung von Luftfederbälgen entstehenden Walkkräfte elastisch abzustützen und so von der Karosserie oder anderen Bauteilen zu isolieren, daß eine Verbesserung des Fahrkomforts erreicht wird.

Gelöst wird nun diese Aufgabe gemäß Kennzeichen des Patentanspruches 1 dadurch, daß
- das Luftfedersystem mit einem Rollfaltenlager ausgestattet ist, das den Luftfederdeckel innerhalb dessen mittleren Bereiches ringförmig umläuft und dabei die sich im Bereich des oberen Endes des Luftfederbalges ausbildende Rollfalte elastisch abstützt, wobei wiederum die Abstützung des Rollfaltenlagers an einem Bauteil erfolgt, das ein Teilelement des Luftfederdeckels, ein Anschlußbauteil oder ein Zusatzbauteil ist.

Zweckmäßige Ausführungsformen des erfindungsgemäßen Luftfedersystems sind in den Patentansprüchen 2 bis 13 genannt.

Die Erfindung wird nun anhand von Ausführungsbeispielen unter Bezugnahme auf schematische Zeichnungen erläutert. Es zeigen:
- Fig. 1: ein Luftfedersystem mit Rollfaltenlager;
- Fig. 2: ein Rollfaltenlager, das sich an der freien Unterseite des karosseriefesten Bauteiles abstützt;
- Fig. 3: ein Rollfaltenlager, das sich an einer speziell geformten Anlagefläche innerhalb des mittleren Bereiches des Luftfederdeckels abstützt;
- Fig. 4: ein Rollfaltenlager mit Stützring, der mit dem Klemmring ein einstückiges Bauteil bildet;
- Fig. 5: ein Rollfaltenlager mit separatem Stützring;
- Fig. 6a: ein Rollfaltenlager mit Taschen; sowie
- Fig. 6b: ein Rollfaltenlager mit Taschen gemäß Schnitt X-X (Fig. 6a).

In Verbindung mit diesen Figuren gilt folgende Bezugsziffernliste:
- 1: Luftfedersystem
- 2: Luftfederbalg
- 2': oberes Ende des Luftfederbalges (umgebördelt)
- 2": unteres Ende des Luftfederbalges (umgebördelt)
- 3: Klemmring
- 3': Klemmring
- 3": Klemmring
- 4: Rollfalte (oben)
- 4': Rollfalte (unten)
- 5: Luftfederdeckel mit den Bereichen
A (unterer Bereich; Befestigungsbereich des Luftfederbalges)
B (mittlerer Bereich; Hauptbereich des Rollfaltenlagers)
C (oberer Bereich; Verbindungsbereich zum Anschlußbauteil)
- 6: Luftfederkolben
- 6': Außenwand des Luftfederkolbens (Abrollfläche)
- 7: Rollfaltenlager
- 7': Rollfaltenlager
- 7": Rollfaltenlager
- 7''': Rollfaltenlager
- 7"": Rollfaltenlager
- 8: freie Unterseite des oberen Bereiches des Luftfederdeckels
- 8': freie Unterseite des karosseriefesten Bauteiles
- 9: Anlagefläche
- 10: Stützring (einstückig mit Klemmring verbunden)
- 10': Stützring (separates Bauteil)
- 11: Abstützfläche des Stützringes
- 11': Abstützfläche des Stützringes
- 12: flanschförmige Verbreiterung
- 13: Freiraum
- 13': Freiraum
- 14: Taschen

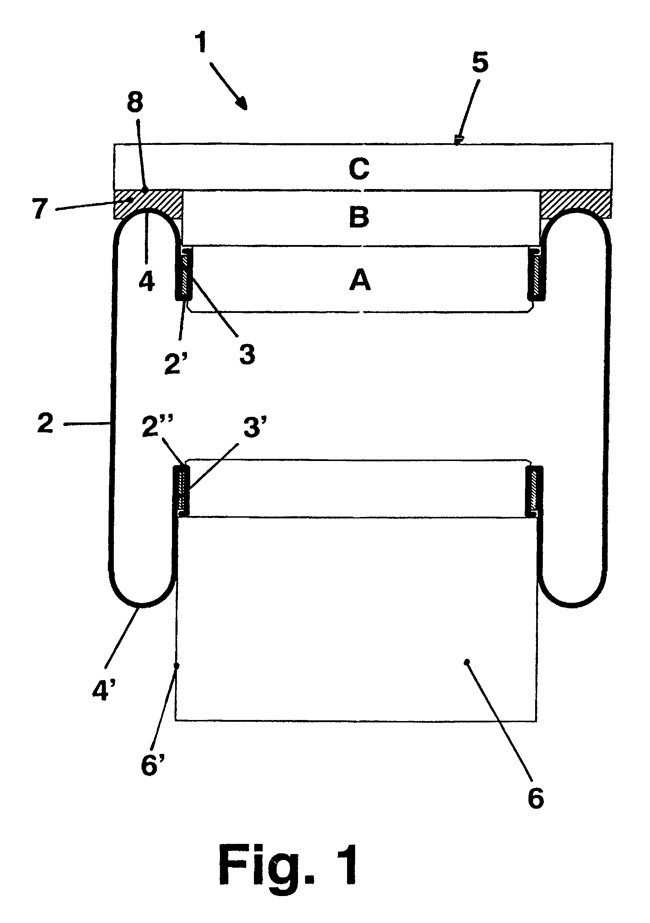

Fig. **1** zeigt die wesentlichen Bauteile des Luftfedersystems **1,** wobei das Umfeld des Luftfederdeckels **5** im Rahmen der Erfindung von besonderer Bedeutung ist. Luftfederdeckel können je nach baulichen Vorgaben unterschiedlich konstruiert sein, lassen sich jedoch schematisiert in folgende drei Bereiche **A, B** und **C** einteilen, die in Verbindung mit dem Ausführungsbeispiel gemäß Fig. 1 nun näher erläutert werden.
- Bereich **A:**: Innerhalb dieses unteren Bereiches ist das obere Ende **2'** des Luftfederbalges **2** aus elastomerem Werkstoff befestigt, und zwar mit Hilfe des Klemmringes **3** unter gleichzeitiger Umbördelung des Luftfederbalges. Der Klemmring besteht zumeist aus Metall.
- Bereich **B:**: Innerhalb dieses mittleren Bereiches umläuft das Rollfaltenlager **7** ringförmig den Luftfederdeckel **5**. Die sich im Bereich des oberen Endes des Luftfederbalges ausbildende Rollfalte **4** wird nun durch das Rollfaltenlager **7** elastisch abgestützt.
- Bereich **C:**: Dieser obere Bereich steht mit einem Anschlußbauteil, insbesondere mit einem karosseriefesten Bauteil, in Verbindung. Das Rollfaltenlager **7** stützt sich hier direkt an der freien Unterseite **8** des oberen Bereiches des Luftfederdeckels **5** ab.

Ein weiteres Bauteil des Luftfedersystems **1** ist der Luftfederkolben **6,** an dem das untere Ende **2**" des Luftfederbalges **2** ebenfalls mittels eines Klemmringes **3'** unter gleichzeitiger Umbördelung des Luftfederbalgendes befestigt ist. An der Außenwand **6'** des Luftfederkolbens kann nun der Luftfederbalg unter Ausbildung der Rollfalte **4'** abrollen.

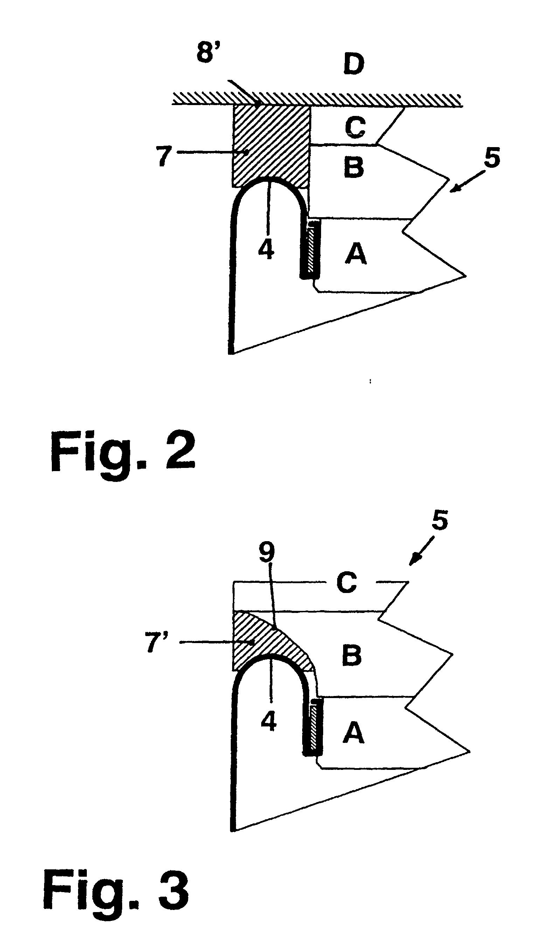

Die Fig. 2 bis 5 zeigen nun verschiedene Abstützungsvarianten für das Rollfaltenlager.

Nach Fig. 2 stützt sich das Rollfaltenlager 7 direkt an der freien Unterseite **8'** des karoseriefesten Bauteiles **D** ab.

Bei der Variante gemäß Fig. 3 erfolgt die Abstützung des Rollfaltenlager **7'** an einer speziell geformten Anlagefläche **9** innerhalb des mittleren Bereiches **B** des Luftfederdeckels **5**, wobei die Anlagefläche vorzugsweise kantenfrei in Form einer konkaven Außenkontur in den oberen Bereich **C** des Luftfederdeckels übergeht.

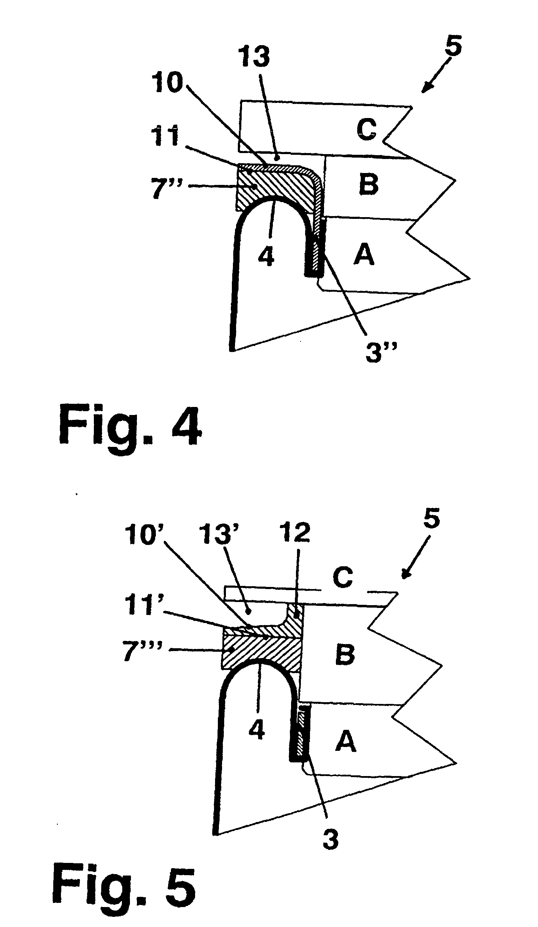

Fig. 4 zeigt nun ein Ausführungsbeispiel, bei dem die Abstützung des Rollfaltenlagers **7"** mittels eines Zusatzbauteiles in Form eines Stützringes **10** erfolgt, der den Luftfederdeckel **5** innerhalb dessen mittleren Bereiches **B** umläuft. Der Stützring **10** und der Klemmring **3"** bilden dabei ein einstückiges und winkelförmiges Bauteil, wobei der Stützring bzw. seine Abstützfläche **11** im wesentlichen parallel zum oberen Bereich **C** des Luftfederdeckels **5** verläuft. Zwischen dem Stützring **10** und dem Bereich **C** ist ein Freiraum **13** vorhanden, was zu einer zusätzlichen Abfederung beiträgt.

Nach Fig. 5 ist der Stützring **10'** für das Rollfaltenlager **7"'** unter Bezug auf den Klemmring **3** ein separates Bauteil, wobei die Abstützfläche **11'** des Stützringes im wesentlichen parallel zum oberen Bereich **C** des Luftfederdeckels **5** verläuft, und zwar in Verbindung mit einer flanschförmigen Verbreiterung **12** zum mittleren Bereich **B** des Luftfederdeckels hin. Auch hier ist ein Freiraum **13'** zwischen dem Stützring **10'** und dem Bereich **C** vorhanden.

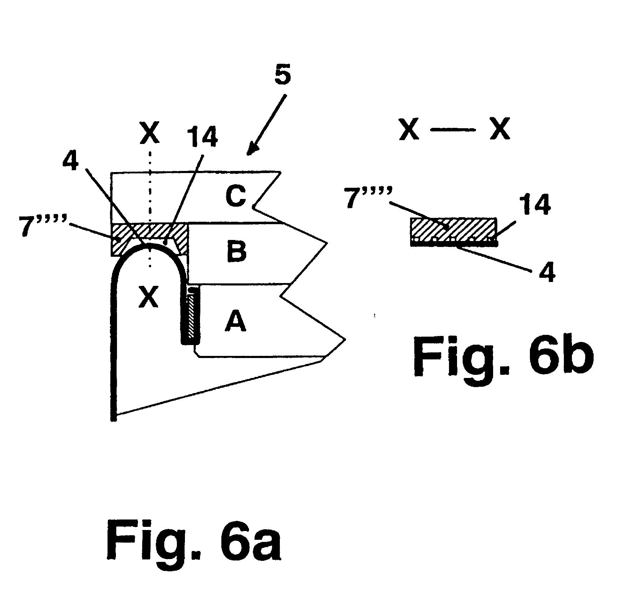

Fig. 6a zeigt nun ein Rollfaltenlager **7"",** das zur Rollfalte **4** hin Taschen **14** aufweist, die insbesondere in regelmäßigen Abständen angeordnet das Rollfaltenlager vollständig in Ringrichtung umlaufen (Fig. 6b). Auf diese Weise wird die Steifigkeit des Rollfaltenlagers in vorteilhafter Weise beeinflußt.

Das Rollfaltenlager besteht zweckmäßigerweise aus elastomerem Werkstoff, insbesondere auf der Basis von NR, EPDM und PU-Schaumstoff.

Der Einbau des Rollfaltenlagers erfolgt im Rahmen üblicher Maßnahmen, nämlich durch Einsetzen, Aufkleben oder Anvulkanisieren.

## Patentansprüche

1. Luftfedersystem (1), bestehend mindestens aus
- einem Luftfederbalg (2) aus elastomerem Werkstoff, der gegebenenfalls mit Verstärkungseinlagen versehen ist;
- einem Luftfederdeckel (5), umfassend einen unteren Bereich (A), an dem das obere Ende (2') des Luftfederbalges (2) mittels eines ersten Klemmringes (3) oder dergleichen befestigt ist, einen mittleren Bereich (B) und einen oberen Bereich (C), der zugleich mit einem Anschlußbauteil, insbesondere mit einem karosseriefesten Bauteil (D), in Verbindung steht; sowie
- einem Luftfederkolben (6), an dem das untere Ende (2") des Luftfederbalges (2) ebenfalls mittels eines zweiten Klemmringes (3') oder dergleichen befestigt ist und an dessen Außenwand (6') der Luftfederbalg abrollen kann;
**dadurch gekennzeichnet, daß**
- das Luftfedersystem (1) mit einem Rollfaltenlager (7, 7', 7", 7"', 7"") ausgestattet ist, das den Luftfederdeckel (5) ringförmig umläuft und dabei die sich im Bereich des oberen Endes des Luftfederbalges (2) ausbildende Rollfalte (4) elastisch abstützt, wobei wiederum die Abstützung des Rollfaltenlagers an einem Bauteil erfolgt, das ein Teilelement des Luftfederdeckels, ein Anschlußbauteil oder ein Zusatzbauteil ist.

2. Luftfedersystem nach Anspruch 1, **dadurch gekennzeichnet, daß** das Rollfaltenlager (7, 7', 7", 7"', 7"") den Luftfederdeckel (5) ausschließlich innerhalb dessen mittleren Bereiches (B) ringförmig umläuft.

3. Luftfedersystem nach Anspruch 1, **dadurch gekennzeichnet, daß** das Rollfaltenlager (7) den Luftfederdeckel (5) innerhalb dessen mittleren Bereiches (B) und oberen Bereiches (C) ringförmig umläuft.

4. Luftfedersystem nach einem der Ansprüche 1 bis 3, **dadurch gekennzeichnet, daß** das Rollfaltenlager (7, 7', 7", 7''', 7"") aus elastomerem Werkstoff besteht.

5. Luftfedersystem nach Anspruch 4, **dadurch gekennzeichnet, daß** der elastomere Werkstoff aus Naturkautschuk (NR), Ethylen-Propylen-Dien-Mischpolymerisat (EPDM) oder Schaumstoffen, vorzugsweise aus Polyurethan-Schaumstoff, besteht.

6. Luftfedersystem nach einem der Ansprüche 1 bis 5, insbesondere in Verbindung mit Anspruch 2, **dadurch gekennzeichnet, daß** die Abstützung des Rollfaltenlagers (7) direkt an der freien Unterseite (8) des oberen Bereiches (C) des Luftfederdeckels (5) erfolgt.

7. Luftfedersystem nach einem der Ansprüche 1 bis 5, insbesondere in Verbindung mit Anspruch 3, **dadurch gekennzeichnet, daß** die Abstützung des Rollfaltenlagers (7) direkt an der freien Unterseite (8') des Anschlußbauteiles, insbesondere des karosseriefesten Bauteiles (D), erfolgt.

8. Luftfedersystem nach einem der Ansprüche 1 bis 5, insbesondere in Verbindung mit Anspruch 2, **dadurch gekennzeichnet, daß** die Abstützung des Rollfaltenlagers (7') an einer speziell geformten Anlagefläche (9) innerhalb des mittleren Bereiches (B) des Luftfederdeckels (5) erfolgt, wobei die Anlagefläche vorzugsweise kantenfrei und in Form einer konkaven Außenkontur in den oberen Bereich (C) des Luftfederdeckels (5) übergeht.

9. Luftfedersystem nach einem der Ansprüche 1 bis 5, insbesondere in Verbindung mit Anspruch 2, **dadurch gekennzeichnet, daß** die Abstützung des Rollfaltenlagers (7", 7"') an einem Stützring (10, 10') erfolgt, der den Luftfederdeckel (5) innerhalb dessen mittleren Bereiches (B) umläuft.

10. Luftfedersystem nach Anspruch 9, **dadurch gekennzeichnet, daß** der Stützring (10) und der dritte Klemmring (3") ein einstückiges und winkelförmiges Bauteil bilden, wobei der Stützring bzw. seine Abstützfläche (11) im wesentlichen parallel zum oberen Bereich (C) des Luftfederdeckels (5) verläuft.

11. Luftfedersystem nach Anspruch 9, **dadurch gekennzeichnet, daß** der Stützring (10') unter Bezug auf den ersten Klemmring (3) ein separates Bauteil ist, wobei die Abstützfläche (11') des Stützringes im wesentlichen parallel zum oberen Bereich (C) des Luftfederdeckels (5) verläuft, insbesondere in Verbindung mit einer flanschförmigen Verbreiterung (12) zum mittleren Bereich (B) des Luftfederdeckels hin.

12. Luftfedersystem nach einem der Ansprüche 9 bis 11, **dadurch gekennzeichnet, daß** zwischen dem Stützring (10, 10') und dem oberen Bereich (C) des Luftfederdeckels (5) ein Freiraum (13, 13') vorhanden ist.

13. Luftfedersystem nach einem der Ansprüche 1 bis 12, **dadurch gekennzeichnet, daß** das Rollfaltenlager (7, 7', 7", 7''', 7"") zur Rollfalte (4) hin Taschen (14), Aussparungen oder dergleichen aufweist, die insbesondere in regelmäßigen Abständen angeordnet das Rollfaltenlager vollständig in Ringrichtung umlaufen.

## Claims

1. Air spring system (1), consisting at least of
- an air spring bellows (2) which is made of elastomer material and if necessary is provided with reinforcing inlays;
- an air spring cover (5), comprising a lower area (A) to which the upper end (2') of the air spring bellows (2) is fastened by means of a first clamping ring (3) or the like, a middle area (B) and an upper area (C) which is also connected to a connecting component, in particular to a component (D) fixed to the body, and,
- an air spring piston (6) to which the lower end (2") of the air spring bellows (2) is fastened also by means of a second clamping ring (3') or the like and on the outer wall (6') of which the air spring bellows can roll,
**characterised in that**
- the air spring system (1) is equipped with a rolling pleat support (7, 7', 7", 7"', 7"") which runs annularly around the air spring cover (5) and in the process elastically supports the rolling pleat (4) forming in the area of the upper end of the air spring bellows (2), and again the rolling pleat support is supported on a component which is a sub-element of the air spring cover, a connecting component or a supplementary component.

2. Air spring system according to claim 1, **characterised in that** the rolling pleat support (7, 7', 7", 7"', 7"") runs annularly around the air spring cover (5) solely inside its middle area (B).

3. Air spring system according to claim 1, **characterised in that** the rolling pleat support (7) runs annularly around the air spring cover (5) inside its middle area (B) and upper area (C).

4. Air spring system according to one of claims 1 to 3, **characterised in that** the rolling pleat support (7, 7', 7", 7'", 7"") is made of elastomer material.

5. Air spring system according to claim 4, **characterised in that** the elastomer material consists of natural rubber (NR), ethylene-propylene-diene mixed polymer (EPDM) or foams, preferably of polyurethane foam.

6. Air spring system according to one of claims 1 to 5, in particular in connection with claim 2, **characterised in that** the rolling pleat support (7) is supported directly on the free underside (8) of the upper area (C) of the air spring cover (5).

7. Air spring system according to one of claims 1 to 5, in particular in connection with claim 3, **characterised in that** the rolling pleat support (7) is supported directly on the free underside (8') of the connecting component, in particular of the component (D) fixed to the body.

8. Air spring system according to one of claims 1 to 5, in particular in connection with claim 2, **characterised in that** the rolling pleat support (7') is supported directly on a specially shaped bearing surface (9) within the middle area (B) of the air spring cover (5), the bearing surface preferably running into the upper area (C) of the air spring cover (5) without any edges in the form of a concave external contour.

9. Air spring system according to one of claims 1 to 5, in particular in connection with claim 2, **characterised in that** the rolling pleat support (7", 7''') is supported on a supporting ring (10, 10') which runs around the air spring cover (5) within its middle area (B).

10. Air spring system according to claim 9, **characterised in that** the supporting ring (10) and the third clamping ring (3") form a one-piece angled component, the supporting ring and its supporting surface (11) running essentially parallel to the upper area (C) of the air spring cover (5).

11. Air spring system according to claim 9, **characterised in that** the supporting ring (10') is a separate component in relation to the first clamping ring (3), the supporting surface (11') of the supporting ring running essentially parallel to the upper area (C) of the air spring cover (5), in particular in connection with a flange-shaped widening (12) towards the middle area (B) of the air spring cover.

12. Air spring system according to one of claims 9 to 11, **characterised in that** a free space (13, 13') is present between the supporting ring (10, 10') and the upper area (C) of the air spring cover (5).

13. Air spring system according to one of claims 1 to 12, **characterised in that** facing the rolling pleat (4) the rolling pleat support (7, 7', 7", 7"', 7"") exhibits pockets (14), recesses or the like which run completely around the rolling pleat support in the annular direction in particular arranged at regular intervals.

## Revendications

1. Système de suspension pneumatique (1), constitué au moins
- d'un soufflet formant l'ensemble pneumatique, en matériau élastomère, muni le cas échéant d'inserts de renforcement,
- d'un couvercle de ressort pneumatique (5), comprenant une zone inférieure (A), à laquelle l'extrémité supérieure (2') du soufflet formant ressort pneumatique (2) est fixée à l'aide d'au moins un anneau de serrage (3) ou analogue, une zone médiane (B) et une zone supérieure (C), en même temps reliée à un composant de raccordement, en particulier un composant (D) fixé à la carrosserie, ainsi qu'
- un piston de ressort pneumatique (6), sur lequel l'extrémité inférieure (2") du soufflet formant ressort pneumatique (2) est fixée, également au moyen d'un deuxième anneau de serrage (3') ou analogue, et sur la paroi extérieure (6') de laquelle le soufflet formant ressort pneumatique peut rouler;
**caractérisé en ce que**
- le système de suspension pneumatique (1) est muni d'un palier à plis roulants (7, 7', 7", 7''', 7""), entourant en forme d'anneau le couvercle de ressort pneumatique (5), et soutient élastiquement les plis roulants (4) se formant dans la zone de l'extrémité supérieure du soufflet formant ressort pneumatique (2), à son tour la mise en appui du palier pour pli roulant se faisant sur un composant qui est un élément partiel du couvercle de ressort pneumatique, un composant de raccordement ou un composant additionnel.

2. Système de suspension pneumatique selon la revendication 1, **caractérisé en ce que** le palier à plis roulants (7, 7', 7", 7''', 7"") entoure en forme d'anneau le couvercle de ressort pneumatique (5) à l'exception de sa zone (B) médiane.

3. Système de suspension pneumatique selon la revendication 1, **caractérisé en ce que** le palier à plis roulants (7) entoure en forme d'anneau le couvercle de ressort pneumatique (5), à l'intérieur de sa zone médiane (B) et de sa zone supérieure.

4. Système de suspension pneumatique selon une des revendications 1 à 3, **caractérisé en ce que** le palier à plis roulants (7, 7', 7", 7"', 7"") formé d'un matériau élastomère.

5. Système de suspension pneumatique selon la revendication 4, **caractérisé en ce que** le matériau élastomère formé de caoutchouc naturel (NR), d'un polymérisat mélangé éthylène - propylène - diène (EPDM) ou de substances alvéolaires, de préférence en une matière alvéolaire à base de polyuréthanne.

6. Système de suspension pneumatique selon une des revendications 1 à 5, en particulier en liaison avec la revendication 2, **caractérisé en ce que** l'appui du palier à plis roulants (7) se fait directement sur la face inférieure libre (8) de la zone supérieure (C) du couvercle de ressort pneumatique (5).

7. Système de suspension pneumatique selon une des revendications 1 à 5, en particulier en liaison avec la revendication 3, **caractérisé en ce que** l'appui du palier à plis roulants (7) se fait directement sur la face inférieure libre (8') du composant de raccordement, en particulier le composant (D) fixé à la carrosserie.

8. Système de suspension pneumatique selon une des revendications 1 à 5, en particulier en liaison avec la revendication 2, **caractérisé en ce que** l'appui du palier à plis roulants (7') se fait sur une face d'appui (9) à forme spéciale, située à l'intérieur de la zone médiane (B) du couvercle de ressort pneumatique (5), la face d'appui se transformant, de préférence sans angle vif et sous la forme d'un contour extérieur concave, en la zone supérieure (C) du couvercle de ressort pneumatique (5).

9. Système de suspension pneumatique selon une des revendications 1 à 5, en particulier en liaison avec la revendication 2, **caractérisé en ce que** l'appui du palier à plis roulants (7", 7"') se fait sur une base d'appui (10, 10'), entourant le couvercle de ressort pneumatique 5 à l'intérieur de sa zone médiane (B).

10. Système de suspension pneumatique selon la revendication 9, **caractérisé en ce que** la bague d'appui (10) et le troisième anneau (3") forment un composant d'une seule pièce et en forme de cornière, la bague d'appui ou sa face de soutien (11) s'étendant sensiblement parallèlement à la zone supérieure (C) du couvercle du ressort pneumatique (5).

11. Système de suspension pneumatique selon la revendication 9, **caractérisé en ce que** la bague d'appui (10') est, en se référant au premier anneau de serrage (3), un composant séparé, la face d'appui (11') de la bague d'appui s'étendant sensiblement parallèlement à la zone supérieure (C) du couvercle de ressort pneumatique (5), en particulier en liaison avec un élargissement en forme de bride, situé vers la zone médiane (B) du couvercle de ressort pneumatique.

12. Système de suspension pneumatique selon une des revendications 9 à 11, **caractérisé en ce qu'**un espace libre (13, 13') est aménagé entre la bague d'appui (10, 10') et la zone supérieure (C) du couvercle de ressort pneumatique (5).

13. Système de suspension pneumatique selon une des revendications 1 à 12, **caractérisé en ce que** le palier à plis roulants (7, 7', 7", 7"', 7"") présente pour les plis roulants (4) des poches (14), des évidements ou analogue, entourant, en particulier en étant disposé selon des espacements réguliers, le palier à plis roulants complètement dans la direction de la forme annulaire.
